(19) Europäisches Patentamt
European Patent Office
Office européen des brevets

(11) **EP 4 431 902 A1**

(12) **EUROPÄISCHE PATENTANMELDUNG**

(43) Veröffentlichungstag:
**18.09.2024 Patentblatt 2024/38**

(21) Anmeldenummer: **23161521.2**

(22) Anmeldetag: **13.03.2023**

(51) Internationale Patentklassifikation (IPC):
***G01N 1/22*** *(2006.01)*

(52) Gemeinsame Patentklassifikation (CPC):
**G01N 1/2202; G01N 1/2205; G01N 1/2258;**
G01N 2001/2064; G01N 2001/2282

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Primetals Technologies Austria GmbH**
**4031 Linz (AT)**

(72) Erfinder:
• **Tratnig, Mark**
**9173 St. Margareten i.R. (AT)**

• **Reischl, Christoph**
**4162 Julbach (AT)**
• **Rohrhofer, Andreas**
**4070 Eferding (AT)**
• **Wohlfart, Klaus**
**4075 Fraham (AT)**

(74) Vertreter: **Metals@Linz**
**Primetals Technologies Austria GmbH**
**Intellectual Property Upstream IP UP**
**Turmstraße 44**
**4031 Linz (AT)**

(54) **GASENTNAHMEVORRICHTUNG UND GASANALYSEVORRICHTUNG ZUR ENTNAHME EINES HEISSEN, STAUBBELADENEN GASES AUS EINER ABGASLEITUNG EINER METALLURGISCHEN ANLAGE**

(57) Die vorliegende Erfindung betrifft das Gebiet der Gasentnahme von staubbeladenem Gas bei metallurgischen Anlagen und dessen Aufbereitung zur Gasanalyse.

Einerseits betrifft die Erfindung eine Gasentnahmevorrichtung 1 zur Entnahme eines heißen, staubbeladenen Gases aus einer Abgasleitung 2 einer metallurgischen Anlage, insbesondere eines Sauerstoffaufblaskonverters oder eines Elektrolichtbogenofens. Das heiße, staubbeladene Gas weist ferromagnetisches Partikelmaterials auf. Ein Entnahmerohr 3 wird derart in der Abgasleitung angeordnet, dass ein Teilstrom des Gases entnommen wird, wobei dem Entnahmerohr
- eine Kühlstrecke 4,
- eine Gasreinigungsstrecke 6,
- eine Analysestrecke 7a,
- eine Gasfördereinheit 8 und
-ein Rückführrohr 9 nachgeordnet sind.

Andererseits betrifft die Erfindung eine Gasanalysevorrichtung umfassend die Gasentnahmevorrichtung 1.

Die Aufgabe dieser Erfindung ist es, eine Vorrichtung zu schaffen, die es erlaubt, die Gaszusammensetzung eines heißen, staubbeladenen Abgases mit geringer Zeitverzögerung, geringer Messunsicherheit und hoher Ausfallsicherheit zu messen. Diese Aufgabe wird dadurch gelöst, dass die Gasreinigungstrecke 6 einen magnetischen Partikelabscheider aufweist, durch den ferromagnetisches Partikelmaterial zu einem entsprechenden Teil aus dem Teilstrom des Gases abgeschieden wird.

Fig. 1

**Beschreibung**

Bezeichnung der Erfindung

Gasentnahmevorrichtung und Gasanalysevorrichtung zur Entnahme eines heißen, staubbeladenen Gases aus einer Abgasleitung einer metallurgischen Anlage.

Gebiet der Technik

Die vorliegende Erfindung betrifft das Gebiet der Gasentnahme von staubbeladenem Gas bei metallurgischen Anlagen und dessen Aufbereitung zur Gasanalyse.

Einerseits betrifft die Erfindung eine Gasentnahmevorrichtung zur Entnahme eines heißen, staubbeladenen Gases aus einer Abgasleitung einer metallurgischen Anlage, insbesondere eines Sauerstoffaufblaskonverters oder eines Elektrolichtbogenofens. Das heiße, staubbeladene Gas weist ferromagnetisches Partikelmaterials auf. Ein Entnahmerohr wird derart in der Abgasleitung angeordnet, dass ein Teilstrom des Gases entnommen wird, wobei dem Entnahmerohr

- eine Kühlstrecke, zur Kühlung des ferromagnetischen Partikelmaterials auf eine Temperatur von unter 750 °C,
- eine Gasreinigungsstrecke,
- eine Analysestrecke,
- eine Gasfördereinheit und
- ein Rückführrohr nachgeordnet sind.

Andererseits betrifft die Erfindung eine Gasanalysevorrichtung umfassend die Gasentnahmevorrichtung.

Stand der Technik

Nachfolgend wird eine Gasentnahmevorrichtung zur Entnahme eines heißen staubbeladenen Gases aus einer Abgasleitung und/oder einer Abgasbehandlungseinheit einer metallurgischen Anlage beschrieben. Die metallurgische Anlage ist insbesondere ein Sauerstoffaufblaskonverter oder ein Elektrolichtbogenofen, wobei das heiße staubbeladene Gas ferromagnetisches Partikelmaterial aufweist. Dabei treten am Ort der Gasentnahmevorrichtung Abgastemperaturen von 200°C - 1000 °C sowie Partikelbeladungen von typischerweise bis zu 100 g/m$^3$ auf, wobei diese Angabe auf 0 °C und 1 bar bezogen ist.

In Stahlwerken werden häufig Abgasanalysen herangezogen, um metallurgische Prozesse zu analysieren bzw. zu regeln. Damit kann z.B. der Verbrauch von Einsatzstoffen optimiert werden, die Lebensdauer von Anlagenkomponenten verlängert werden, die Produktionszeit verkürzt werden oder die energetische Verwertung von Prozessgasen oder Abgasen maximiert werden.

Einerseits kommen zur Analyse der Abgaszusammensetzung sogenannte extraktive Messverfahren zur Anwendung. Hierbei wird der Abgasleitung Gas entnommen, gereinigt, getrocknet und anschließend einem Gasanalysator zugeführt. Typische Totzeiten einer solchen Analyse betragen 15 - 30 Sekunden. Eine Totzeit dieser Größenordnung wirkt sich auf die Dynamik eines oben beschriebenen Regelkreises nachteilig aus. Darüber hinaus sinkt mit der Länge dieser Totzeit die Anlagensicherheit, da explosive Gasmischungen erst später erkannt werden und somit auch erst später, beispielsweise durch Umschalten von Gasventilen, darauf reagiert werden kann.

Andererseits kommen zur Analyse der Abgaszusammensetzung sogenannte in-situ Messverfahren zur Anwendung. Hierbei wird die Gaszusammensetzung mit optischen Verfahren, beispielsweise laseroptischen Verfahren, direkt in der Gasleitung bestimmt. Die Zuverlässigkeit der Messung hängt stark von der Staubbeladung des Abgasstromes ab. Bei zu starker Staubbeladung tritt starkes Messrauschen bis hin zum zeitweiligen Ausfall der Messung auf. Dies führt ebenfalls zu unbefriedigendem Regelverhalten bis hin zu einer Gefährdung der Anlagensicherheit. Darüber hinaus verbrauchen derartige Systeme hohe Mengen an Spülgas und verursachen hohen Wartungsaufwand.

Außerdem werden Systeme zur Gasanalyse beschrieben, die Merkmale beider oben genannter Messprinzipien aufweisen. In EP3809111A1 ist z.B. ein Entnahmerohr derart in der Abgasleitung angeordnet, dass ein Teilstrom des Gases entnommen wird. Dem Entnahmerohr sind eine Kühlstrecke zur Kühlung des Gases bzw. des beinhalteten Partikelmaterials, eine Gasreinigungsstrecke, eine Analysestrecke, eine Gasfördereinheit und ein Rückführrohr nachgeordnet. Nachteilig ist, dass ein System dieser Art aufgrund des eingesetzten Filters erheblichen Wartungsaufwand verursacht. Darüber hinaus tritt eine unerwünschte Totzeit auf, die auf das zu durchströmende Volumen der Gasentnahmevorrichtung, inklusive Filter und anderer Komponenten zur Gasaufbereitung, zurückzuführen ist.

Zusammenfassung der Erfindung

Die Aufgabe dieser Erfindung ist es, eine Vorrichtung zu schaffen, die es erlaubt, aus einem heißen staubbeladenem Abgas eine Teilmenge zu entnehme und derart aufzubereiten, dass die Gaszusammensetzung des Abgases mit geringer Zeitverzögerung, geringer Messunsicherheit und hoher Ausfallsicherheit gemessen werden kann.

Diese Aufgabe wird dadurch gelöst, dass die Gasreinigungstrecke einen magnetischen Partikelabscheider aufweist, welcher derart ausgelegt ist, dass ferromagnetisches Partikelmaterial mit einer Größe von über 0,15 $\mu$m zumindest zu 30%, bevorzugt zu 50%, besonders bevorzugt zu 70%, ganz besonders bevorzugt zu 80% aus dem Teilstrom des Gases abgeschieden wird.

Die Erfahrung hat gezeigt, dass eine Abscheidung dieses Partikelmaterials ausreicht, um mit bekannten optischen Gasanalysatoren zuverlässige Ergebnisse zu erzielen.

Die magnetische Kraft auf ein ferromagnetisches Partikel in einem Magnetfeld kann mit

$$F_m = (\mu_{r1} - 1) \cdot \mu_0 \cdot V_p \cdot H \cdot grad(\vec{H}) \qquad \text{(Gleichung 1)}$$

analytisch abgeschätzt werden, wobei $H$ das magnetische Feld, $V_p$ das Volumen des Partikels, $\mu_0$ die magnetische Permeabilität von Vakuum, sowie $\mu_{r1}$ die relative Permeabilität des Partikelmaterials sind.

Das Magnetfeld muss in seiner Stärke und Ausprägung so eingestellt werden, dass die partikelbezogenen Magnetkräfte die Strömungskräfte und Gewichtskräfte derart überwiegen, dass das ferromagnetische Partikelmaterial in der oben beschrieben Weise abgeschieden wird.

Damit das ferromagnetische Partikelmaterial magnetisch abgeschieden werden kann, ist dessen Abkühlung unterhalb der Curie Temperatur erforderlich. Dies erfolgt in einer Kühlstrecke.

Die Kühlstrecke wird aus dem Entnahmerohr gebildet, das entweder durch ein Medium wie Wasser, Gas, oder ein anderes Kühlmedium umströmt wird, oder Wärme durch andere Mechanismen wie natürliche Konvektion an die Umgebung abgibt. Der Gasdurchfluss durch dieses Gasentnahmerohr muss so eingestellt werden, dass sich die im Gas befindlichen ferromagnetischen Partikel unter ihre Curie Temperatur abkühlen können bevor sie den Magnetabscheider erreichen.

In einer vorteilhaften Ausführungsform wird die Gasreinigungsstrecke durch einen Flachkanal gebildet, der einen rechteckigen Querschnitt mit einem Höhen- zu Breitenverhältnis von kleiner als 1:5, bevorzugt kleiner als 1:10 aufweist.

Der Flachkanal ermöglicht eine besonders gute Anhaftung der abzuscheidenden Partikel, da einerseits für das Magnetfeld nur eine geringe Eindringtiefe benötigt wird und andererseits in seinem Inneren eine große Oberfläche für die Partikelabscheidung zur Verfügung steht. Weiters bewirkt die verhältnismäßig große Oberfläche des Flachkanals eine besonders effektive Kühlung des Messgases. Auf der Außenseite des Flachkanals befinden sich Elektromagnete und/oder Permanentmagnete, deren Magnetfeld derart in/auf den Flachkanal wirkt, dass dort vorhandener ferromagnetischer Staub und teilweise an diesem ferromagnetischen Staub anhaftender nicht-ferromagnetischer Staub durch Magnetkräfte an der Innenseite des Flachkanals gehalten wird.

In einer weiteren vorteilhaften Ausführungsform beinhaltet die Gasreinigungsstrecke zumindest eine Leitschaufel, die so angeordnet ist, dass das staubbeladene Gas in Richtung der magnetischen Partikelabscheidung gelenkt wird. Prallen größere Partikel gegen diese Leitschaufel, so werden diese abgebremst und können mit größerer Wahrscheinlichkeit von der magnetischen Partikelabscheidung erfasst werden. Die Strömungsführung wird dadurch so beeinflusst, dass das staubbeladene Gas näher an eine magnetische Wand der Gasreingungsstrecke geführt wird und somit eine effektivere Abscheidung der Staubpartikel erfolgt.

In einer weiteren vorteilhaften Ausführungsform weist die Gasreinigungsstrecke an jenen Wandbereichen, an denen die magnetischen Partikelabscheidung angeordnet ist, zumindest teilweise nicht-ferromagnetisches Material und bevorzugt eine geringere Wandstärke auf als an den restlichen Wandbereichen.

Dadurch werden magnetische Kurzschlüsse vermieden, was zu einer höheren magnetischen Feldstärke in Inneren der magnetischen Partikelabscheidung und damit zu einer verbesserten Partikelabscheidung führt.

In einer weiteren vorteilhaften Ausführungsform sind zwischen einer Wand der Gasreinigungsstrecke und der magnetischen Partikelabscheidung Eisenkernverlängerungen, welche aus ferromagnetischem Material bestehen, angeordnet, die das Magnetfeld an die Gasreinigungsstrecke heranführen. Die Eisenkernverlängerungen können beispielsweise in die Wand der Gasreinigungsstrecke eingesetzt sein. Dadurch kann der Abstand zwischen Magneten und Gasreinigungsstrecke magnetisch überbrückt werden und/oder das Magnetfeld im Bereich der Gasreinigungsstrecke in seiner Form und Stärke beeinflusst werden. Dadurch kann die magnetische Feldstärke in verschiedenen Bereichen der Gasreinigungsstrecke unterschiedlich beeinflusst werden und somit die Form des Magnetfeldes in der Gasreinigungsstrecke entsprechen Gleichung 1 derart optimiert werden, dass eine möglichst gründliche magnetische Partikelabscheidung erfolgt.

In einer weiteren vorteilhaften Ausführungsform weisen die Eisenkernverlängerungen und/oder die Magnete der magnetischen Partikelabscheidung der Gasreinigungsstrecke eine Kühleinrichtung, bevorzugt eine Luftkühlung oder Wasserkühlung auf.

Dadurch wird trotz hoher Temperatur der Gasreinigungsstrecke eine verbesserte magnetische Leitfähigkeit der magnetischen Kerne und/oder eine verbesserte Wirkung der Magnete erreicht. Das führt zu einer höheren magnetischen Feldstärke im Inneren der Gasreinigungsstrecke und damit zu einer verbesserten Partikelabscheidung.

Nachfolgend der Gasreinigungstrecke ist eine Abreinigungsvorrichtung angeordnet, umfassend zumindest ein Abreinigungsrohr zur Erzeugung eines Gasstroms, der das abgeschiedene Partikelmaterial aus der Gasreinigungsstrecke entfernt, bevorzugt zusätzlich eine bewegliche Klappe, welche den zu reinigenden Gasstrom, während der Abreinigungszeit vorwiegend durch die Gasreinigungsstrecke leitet. Sauerstoffaufblaskonverter bzw. Elektrolichtbogenöfen werden zyklisch betrieben. Ein solcher Arbeitszyklus weist zwischen den Phasen, während derer der metallurgische Prozess sattfindet und der Messwert der Gasanalyse kontinuierlich benötigt wird, Zeiträume auf, während derer keine Messdaten benötigt werden. Während dieser Zeiträume kann eine Abreinigung des magnetischen Partikelabscheiders erfolgen, indem die Erregung des Magnetfeldes deaktiviert wird und/oder das abgeschiedene Partikelmaterial durch einen künstlich erzeugten Gasstrom aus der Gasreinigungsstrecke entfernt wird. Dabei sorgt eine Verschlussklappe dafür, dass der abzureinigende Gasstrom durch die Gasreingungsstrecke geleitet wird und nicht ungenutzt entweicht. Die Geometrie der Gasentnahmevorrichtung ermöglicht es, dass die Partikel nach Loslösen von der Innenwand der Gasreinigungsstrecke, unterstützt durch Schwerkraft, in die Abgasleitung zurück gefördert werden. Ebenso kann während dieser Zeiträume eine Entmagnetisierung der dem Magnetfeld des magnetischen Partikelabscheiders ausgesetzten Bauteile aus ferromagnetischem Material erfolgen. Nach Beendigung der Abreinigung wird die Erregung des Magnetfeldes wieder aktiviert und die Gasreinigungsstrecke steht für den Prozess wieder zur Verfügung.

Die Reinigungsvorrichtung zur wiederkehrenden Entfernung der magnetisch an der Innenseite des Flachkanals gehaltenen Partikel ist bevorzugt eine Ausblasvorrichtung, kann jedoch auch als Klopfvorrichtung oder mechanischer Abstreifer ausgeführt sein.

Zum Fördern des zu analysierenden staubbeladenen Gases vom Entnahmerohr bis zum Rückführrohr wird eine Gasfördereinheit verwendet. Dies kann beispielsweise ein Gebläse oder eine Strahlpumpe sein.

Stromaufwärts der Analysestrecke, bezogen auf den Messgasstrom, befindet sich eine Kalibriergasklappe und zumindest eine Kalibriergaseinleitung für die Zufuhr von Kalibriergas, so dass eine Kalibrierung der Analysestrecke in eingebautem Zustand erfolgen kann. Hierfür wird nach Schließen der beweglichen Klappe Gas mit einer bekannten Zusammensetzung in die Analysestrecke eingeleitet. Danach kann die Analysestrecke, welche im Einsatz ein optisches Gasanalysegerät beinhaltet, kalibriert werden.

In einer vorteilhaften Ausführung weist die Gasentnahmevorrichtung zwischen der Kühlstrecke und der Analysestrecke einen Kompensator zum Ausgleich von thermischen Verformungen und/oder Entkopplung von mechanischen Schwingungen auf, wobei dieser beispielsweise als Wellrohr ausgeführt ist.

In einer weiteren vorteilhaften Ausführung der Gasentnahmevorrichtung ist neben der Analysestrecke eine Bypass Leitung angeordnet, wobei die Bypass Leitung in einer Hauptströmungsrichtung des staubbeladenen Gases ausgerichtet ist, wobei die Gasleitung, welche einen Teilstrom eines Analysegases zur Analysestrecke führt, von der Hauptströmungsrichtung abzweigt. Bevorzugt wird der Teilstrom des Analysegases nach der Analysestrecke mittels Rohrleitung wieder der Bypass Leitung zugeführt. Der Winkel unter dem die Gasleitung, welche den Teilstrom eines Analysegases zur Analysestrecke führt, abzweigt, beträgt 10° bis 170° in Bezug auf die Hauptströmungsrichtung. Durch diese Art der Gasführung wird ein Teil der Partikel, welche nicht von der magnetischen Partikelabscheidung erfasst werden, beispielsweise relativ schwere nicht-ferromagnetische Partikel, über die Bypass Leitung geführt und beeinträchtigen somit nicht die Gasanalyse in der Analysestrecke.

In einer weiteren vorteilhaften Ausführung weist die Gasentnahmevorrichtung zwischen der Kühlstrecke und der Gasreinigungsstrecke eine als Gitter mit einer Maschenweite von 0,5 mm bis 3 mm ausgeführte bewegliche Klappe zur Grobabscheidung von Partikelmaterial auf, wobei diese mit einem Aktuator versehen ist und von einer geschlossenen Position in eine offene Abreinigungsposition bewegbar ist.

In einer weiteren vorteilhaften Ausführung weist die Gasentnahmevorrichtung stromabwärts der Gasreinigungsstrecke ein Abreinigungsrohr auf, das zum Abreinigen von in der Gasreinigungsstrecke angesammeltem Partikelmaterial vorgesehen ist.

Die Aufgabe wird weiters gelöst durch eine Gasanalysevorrichtung, wobei die Analysestrecke ein optisches Gasanalysegerät aufweist, wobei die Analysestrecke im Bereich des optischen Gasanalysegeräts aufgeweitet ist, wobei die Aufweitung zumindest 100 mm beträgt, bevorzugt zumindest 200 mm, besonders bevorzugt zumindest 300 mm beträgt. Die erforderliche optische Pfadlänge hängt vom gewünschten Messbereich der Gaskonzentrationen ab.

Dabei erfolgt die Aufweitung im Wesentlichen in nur einer Dimension, um das Volumen der Gasentnahmevorrichtung und damit die Totzeit der Messung gering zu halten.

Nach der Analyse wird das Abgas über ein Rückführrohr, welches in die Abgasleitung mündet, wieder in die Abgasleitung zurückgeführt.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

Fig. 1    eine Zweiseitenansicht eines Ausführungsbeispiels einer Abgasleitung mit Gasentnahmevorrichtung

Fig. 2    eine Bypass Leitung zur Partikelabscheidung

Fig. 3    eine magnetische Partikelabscheidung

Beschreibung der Ausführungsformen

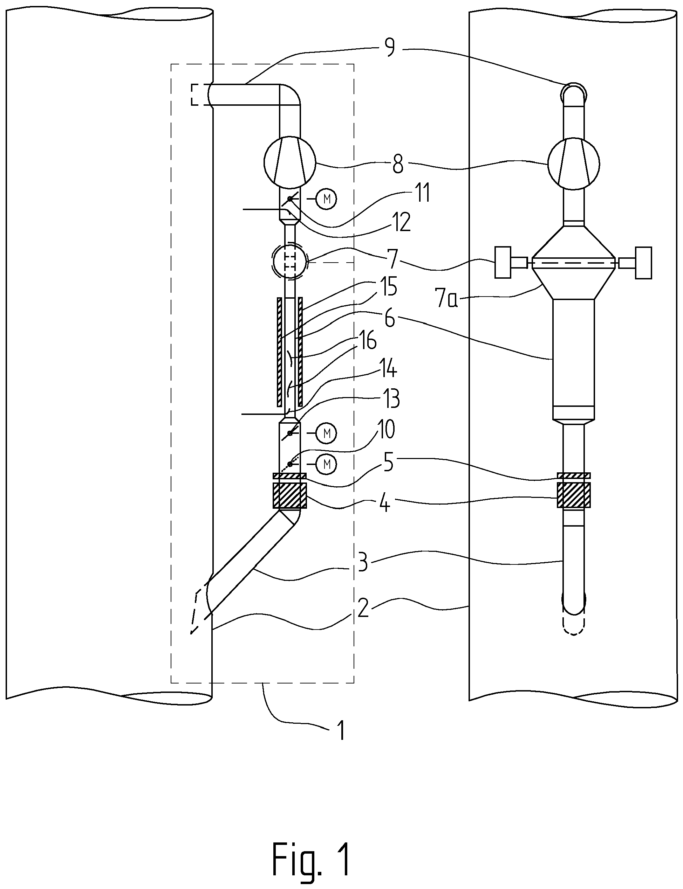

Fig. 1 zeigt ein Ausführungsbeispiel einer Abgasleitung 2 mit der seitlich angeordneten Gasentnahmevorrichtung 1. Die Zweiseitenansicht zeigt die Abgasleitung 2, die Gasentnahmevorrichtung 1, bestehend aus dem Entnahmerohr 3, der Kühlstrecke 4, dem Kompensator 5, der Gasreinigungsstrecke 6 mit Magneten 15, der Analysestrecke 7a mit dem dort integrierten optischen Gasanalysegerät 7, der Gasfördereinheit 8 sowie dem Rückführrohr 9. Darüber hinaus sind eine bewegliche Klappe 10 zur Grobabscheidung von Partikelmaterial, eine weitere bewegliche Klappe 11, ein Abreinigungsrohr 12, eine Kalibriergasklappe 13, sowie eine Kalibriergaseinleitung 14 dargestellt.

Das partikelbeladene, heiße Abgas wird über das Entnahmerohr 3 dem Abgasstrom entnommen und passiert anschließend eine Kühlstrecke 6, einen Kompensator 5 sowie bewegliche Klappe zur Grobabscheidung 10. In der Kühlstrecke 4 wird der Abgasstrom mit dem darin beinhalteten Partikelmaterial so weit abgekühlt, dass das Partikelmaterial größtenteils ferromagnetisch wird. Der Kompensator 5 kann Wärmeausdehnungen der Gasentnahmevorrichtung 1 ausgleichen, bzw. entkoppelt mechanische Schwingungen der Abgasleitung 2. In der nachfolgenden Gasreinigungsstrecke 6 bleibt ferromagnetisches Partikelmaterial, sowie an diesem anhaftendes anderes Partikelmaterial des Gasstroms durch Anlegen von Magnetfeldern weitgehend haften. Dadurch wir die Partikelbeladung des Abgases so weit reduziert, dass das nachfolgend angeordnete optische Gasanalysegerät 7 problemlos Messungen vornehmen kann. Der hierfür nötige Länge des Messpfads von mindestens 100 mm wird durch eine Aufweitung des Strömungskanals in der Analysestrecke 7a erreicht. Dabei sind die Gaskanäle so gestaltet, dass ihr Volumen gering ist und somit auch die Totzeit der Messung geringgehalten werden kann.

Nach Beendigung des metallurgischen Prozesses, kann das Partikelmaterial aus der Gasreinigungsstrecke 6 entfernt werden. Hierfür wird das Magnetfeld abgeschaltet, die bewegliche Klappe zur Grobabscheidung 10 geöffnet, die bewegliche Klappe 11 geschlossen, und Gas über das Abreinigungsrohr 12 zugeführt. Alternativ oder zusätzlich zum Abreinigungsrohr 12 kann auch eine Klopfvorrichtung und/oder ein mechanischer Abstreifer zur Anwendung kommen. Somit löst sich das Partikelmaterial und kann schwerkraftunterstützt zurück in die Abgasleitung ausgebracht werden. Optional kann auch eine Entmagnetisierung der ferromagnetischen Bauteile im Einflussbereich des magnetischen Partikelabscheiders durchgeführt werden.

Typischerweise nach Beendigung des metallurgischen Prozesses kann eine Kalibrierung des optischen Gasanalysegeräts 7 vorgenommen werden. Hierfür wird Klappe 13 geschlossen und über die Kalibriergaseinleitung 14 Kalibriergas in die Analysestrecke eingeleitet, so dass das optische Gasanalysegerät eine entsprechende Kalibrierung durchführen kann.

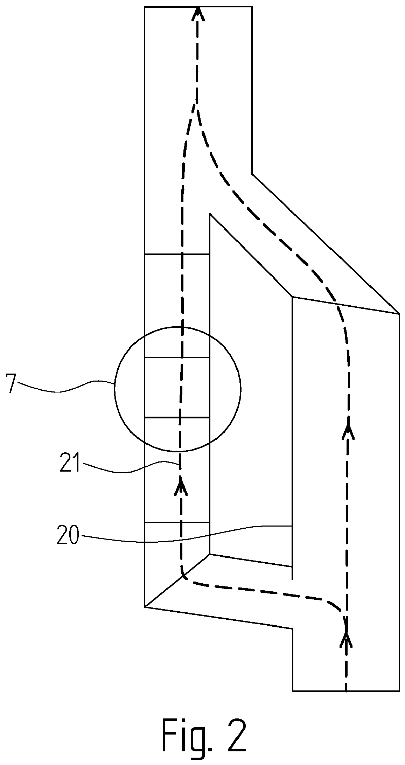

Fig. 2 zeigt eine Bypass Leitung 20, wobei die Bypass Leitung 20 in einer Hauptströmungsrichtung des staubbeladenen Gases ausgerichtet ist, und eine Gasleitung, welche einen Teilstrom 21 eines Analysegases zur Analysestrecke führt, welche von der Hauptströmungsrichtung abzweigt. Der Teilstrom des Analysegases wird nach der Analysestrecke mittels Rohrleitung wieder der Bypass Leitung zugeführt.

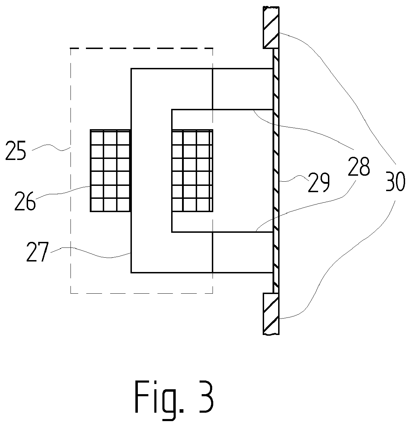

Fig. 3 zeigt eine magnetische Partikelabscheidung, wobei der Magnet 25 als Elektromagnet mit der Wicklung 26 und dem Eisenkern 27 ausgeführt ist, wobei die Kernverlängerung 28 das Magnetfeld an die nicht-ferromagnetische Wand 29 heranführt, die in den restlichen Wandbereich 30 eingesetzt ist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

1    Gasentnahmevorrichtung

| 2 | Abgasleitung |
| --- | --- |
| 3 | Entnahmerohr |
| 4 | Kühlstrecke |
| 5 | Kompensator |
| 6 | Gasreinigungsstrecke |
| 7 | Optisches Gasanalysegerät |
| 7a | Analysestrecke |
| 8 | Gasfördereinheit |
| 9 | Rückführrohr |
| 10 | bewegliche Klappe zur Grobabscheidung |
| 11 | bewegliche Klappe |
| 12 | Abreinigungsrohr |
| 13 | Kalibriergasklappe |
| 14 | Kalibriergaseinleitung |
| 15 | Magnete |
| 16 | Leitschaufeln |
| 20 | Bypass Leitung |
| 21 | Teilstrom |
| 25 | Magnet |
| 26 | Spule |
| 27 | Eisenkern |
| 28 | Eisenkernverlängerung |
| 29 | nicht-ferromagnetisches Material |
| 30 | Restlicher Wandbereich |

**Patentansprüche**

1. Gasentnahmevorrichtung (1) zur Entnahme eines heißen, staubbeladenen Gases aus einer Abgasleitung (2) einer metallurgischen Anlage, insbesondere eines Sauerstoffaufblaskonverters oder eines Elektrolichtbogenofens, wobei das heiße, staubbeladene Gas ferromagnetisches Partikelmaterials aufweist, wobei ein Entnahmerohr (3) derart in der Abgasleitung (2) angeordnet wird, dass ein Teilstrom des Gases entnommen wird, wobei dem Entnahmerohr (3)

   - eine Kühlstrecke (4), zur Kühlung des ferromagnetischen Partikelmaterials auf eine Temperatur von unter 750 °C,
   - eine Gasreinigungsstrecke (6),
   - eine Analysestrecke (7a),
   - eine Gasfördereinheit (8) und
   - ein Rückführrohr (9) nachgeordnet sind,

   **dadurch gekennzeichnet, dass** die Gasreinigungstrecke (6) eine magnetische Partikelabscheidung aufweist, welche derart ausgelegt ist, dass ferromagnetisches Partikelmaterial mit einer Größe von über $0,15\ \mu m$ zumindest zu 30%, bevorzugt zu 50%, besonders bevorzugt zu 70%, ganz besonders bevorzugt zu 80% aus dem Teilstrom des Gases abgeschieden wird.

2. Gasentnahmevorrichtung (1) zur Entnahme eines heißen staubbeladenen Gases aus einer Abgasleitung (2) einer metallurgischen Anlage nach Anspruch 1, **dadurch gekennzeichnet, dass** die Gasreinigungsstrecke (6) durch einen Flachkanal gebildet wird, der einen rechteckigen Querschnitt mit einem Höhen- zu Breitenverhältnis von kleiner als 1:5, bevorzugt kleiner als 1:10 aufweist.

3. Gasentnahmevorrichtung (1) zur Entnahme eines heißen staubbeladenen Gases aus einer Abgasleitung (2) einer metallurgischen Anlage nach den vorhergehenden Ansprüchen, **dadurch gekennzeichnet, dass** die Gasreinigungsstrecke (6) zumindest eine Leitschaufel (16) beinhaltet, die so angeordnet ist, dass das staubbeladene Gas in Richtung der magnetischen Partikelabscheidung gelenkt wird.

4. Gasentnahmevorrichtung (1) zur Entnahme eines heißen staubbeladenen Gases aus einer Abgasleitung einer metallurgischen Anlage nach den vorhergehenden Ansprüchen, **dadurch gekennzeichnet, dass** die Gasreinigungsstrecke (6) an jenen Wandbereichen, an denen die magnetischen Partikelabscheidung angeordnet ist, zumindest teilweise nicht-ferromagnetisches Material (29) aufweist und bevorzugt eine geringere Wandstärke aufweist als an den restlichen Wandbereichen (30), besonders bevorzugt soll die geringere Wandstärke einen Wert von 1 - 10 mm, ganz besonders bevorzugt 1 - 5 mm aufweisen.

5. Gasentnahmevorrichtung (1) zur Entnahme eines heißen staubbeladenen Gases aus einer Abgasleitung einer metallurgischen Anlage nach den vorhergehenden Ansprüchen, **dadurch gekennzeichnet, dass** zwischen einer Wand der Gasreinigungsstrecke (6) und der magnetischen Partikelabscheidung Eisenkernverlängerungen (28), welche aus ferromagnetischem Material bestehen, angeordnet sind, die das Magnetfeld an die Gasreinigungsstrecke (6) heranführen.

6. Gasentnahmevorrichtung (1) zur Entnahme eines heißen staubbeladenen Gases aus einer Abgasleitung einer metallurgischen Anlage nach den vorhergehenden Ansprüchen, **dadurch gekennzeichnet, dass** die Eisenkernverlängerungen (28) und/oder die Magnete eine Kühleinrichtung, bevorzugt eine Luftkühlung oder Wasserkühlung aufweisen.

7. Gasentnahmevorrichtung (1) nach den vorhergehenden Ansprüchen, **dadurch gekennzeichnet, dass** nachfolgend der Gasreinigungstrecke (6) eine Abreinigungsvorrichtung angeordnet ist, umfassend zumindest ein Abreinigungsrohr (12) zur Erzeugung eines Gasstroms und/oder eine Klopfvorrichtung und/oder einen mechanischen Abstreifer, der das abgeschiedene Partikelmaterial aus der Gasreinigungsstrecke (6) entfernt, bevorzugt zusätzlich eine bewegliche Klappe (11), welche den Gasstrom während der Abreinigungszeit vorwiegend durch die Gasreinigungsstrecke (6) leitet.

8. Gasentnahmevorrichtung (1) nach den vorhergehenden Ansprüchen, wobei die Gasfördereinheit (8) ein Gebläse oder eine Strahlpumpe ist.

9. Gasentnahmevorrichtung (1) nach den vorhergehenden Ansprüchen **dadurch gekennzeichnet, dass** die Analysestrecke (7a) mit einer stromaufwärts befindlichen Kalibriergasklappe (13) und zumindest einer Kalibriergaseinleitung (14) für die Zufuhr von Kalibriergas versehen ist.

10. Gasentnahmevorrichtung (1) nach den vorhergehenden Ansprüchen **dadurch gekennzeichnet, dass** zwischen der Kühlstrecke (4) und der Analysestrecke (7a) ein Kompensator (5) zum Ausgleich von thermischen Verformungen und/oder Entkopplung von Schwingungen, angeordnet ist, wobei dieser beispielsweise als Wellrohr ausgeführt ist.

11. Gasentnahmevorrichtung (1) nach einem der vorhergehen Ansprüche **dadurch gekennzeichnet, dass** neben der Analysestrecke (7a) eine Bypass Leitung (20) angeordnet ist, wobei die Bypass Leitung (20) in einer Hauptströmungsrichtung des staubbeladenen Gases ausgerichtet ist und eine Gasleitung einen Teilstrom (21) eines Analysegases von der Hauptströmungsrichtung abzweigt und zur Analysestrecke (7a) führt und der Teilstrom des Analysegases bevorzugt nach der Analysestrecke (7a) mittels Rohrleitung wieder der Bypass Leitung (20) zugeführt wird.

12. Gasentnahmevorrichtung (1) nach einem der vorhergehen Ansprüche **dadurch gekennzeichnet, dass** zwischen der Kühlstrecke (4) und der Gasreinigungsstrecke (6) eine als Gitter mit einer Maschenweite von 0,5 mm bis 3 mm ausgeführte bewegliche Klappe (10) zur Grobabscheidung von Partikelmaterial angeordnet ist, wobei diese mit einem Aktuator versehen ist und von einer geschlossenen Position in eine offene Abreinigungsposition bewegbar ist.

13. Gasentnahmevorrichtung (1) nach einem der vorhergehen Ansprüche **dadurch gekennzeichnet, dass** stromabwärts der Gasreinigungsstrecke (6) ein Abreinigungsrohr (12), zum Abreinigen von in der Gasreinigungsstrecke angesammeltem Partikelmaterial, angeordnet ist.

14. Gasanalysevorrichtung (1) umfassend eine Gasentnahmevorrichtung (1) nach einem der vorhergehenden Ansprüche, **dadurch gekennzeichnet, dass** die Analysestrecke (7a) ein optisches Gasanalysegerät (7) aufweist, wobei die Analysestrecke eine Aufweitung im Bereich des optischen Gasanalysegeräts aufweist, wobei die Aufweitung zumindest 100 mm, bevorzugt zumindest 200 mm, besonders bevorzugt zumindest 300 mm beträgt.

Fig. 1

Fig. 2

Fig. 3

Europäisches
Patentamt

European
Patent Office

Office européen
des brevets

# EUROPÄISCHER RECHERCHENBERICHT

**Nummer der Anmeldung**

EP 23 16 1521

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 809 111 A1 (PRIMETALS TECHNOLOGIES AUSTRIA GMBH [AT]) 21. April 2021 (2021-04-21) | 1,4-10, 13,14 | INV. G01N1/22 |
| A | * Absätze [0039], [0044], [0048], [0051], [0062], [0068] – [0074], [0076], [0077], [0081], [0088], [0094], [0102], [0108], [0128] * * Abbildungen 1,6-16 * | 2,3,11, 12 | |
| A | CN 115 201 427 A (ANHUI LVSHI ENVIRONMENTAL PROTECTION TECH CO LTD) 18. Oktober 2022 (2022-10-18) * Abbildung 4 * | 2 | |
| A | WO 2021/143987 A1 (FLO2R APS [DK]) 22. Juli 2021 (2021-07-22) * das ganze Dokument * | 1-14 | |

**RECHERCHIERTE SACHGEBIETE (IPC)**

G01N

Der vorliegende Recherchenbericht wurde für alle Patentansprüche erstellt

| Recherchenort | Abschlußdatum der Recherche | Prüfer |
|---|---|---|
| Den Haag | 25. August 2023 | Verdoodt, Erik |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 16 1521

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-08-2023

| Im Recherchenbericht angeführtes Patentdokument | Datum der Veröffentlichung | Mitglied(er) der Patentfamilie | Datum der Veröffentlichung |
|---|---|---|---|
| EP 3809111 A1 | 21-04-2021 | KEINE | |
| CN 115201427 A | 18-10-2022 | KEINE | |
| WO 2021143987 A1 | 22-07-2021 | CN 115362360 A | 18-11-2022 |
| | | DK 202070025 A1 | 05-08-2021 |
| | | EP 4090934 A1 | 23-11-2022 |
| | | US 2023085113 A1 | 16-03-2023 |
| | | WO 2021143987 A1 | 22-07-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3809111 A1